# EUROPEAN PATENT SPECIFICATION

(11) **EP 2 535 696 B1**
(45) Date of publication and mention of the grant of the patent: **05.09.2018**
(21) Application number: 10845761.5
(22) Date of filing: 04.03.2010
(51) Int. Cl.: G01N 3/303

(54) **DEVICE FOR TESTING WATER HAMMER STRENGTH OF GLASS BOTTLE**
VORRICHTUNG ZUM TESTEN DER WASSERHAMMERSTÄRKE EINER GLASFLASCHE
DISPOSITIF POUR TESTER LA RÉSISTANCE AU COUP DE BÉLIER D'UNE BOUTEILLE EN VERRE

(30) Priority: 12.02.2010 JP 2010028566
(43) Date of publication of application: 19.12.2012
(73) Proprietor: Toyo Glass Co., Ltd., Shinagawa-ku Tokyo 141-0022 (JP)
(72) Inventor: OHYA Yuuichi, Tokyo 141-0022 (JP); SAITOH Shinji, Tokyo 141-0022 (JP); YAMAGUCHI Johshiroh, Tokyo 141-0022 (JP); UEDA Yosuke, Tokyo 141-0022 (JP)
(74) Representative: Brown, David Leslie
(86) International application number: PCT/JP2010/053555
(87) International publication number: WO 2011/099169

(56) References cited:
- JP-A- 8 145 837
- JP-A- 2005 068 707
- JP-A- 2009 133 708
- JP-A- 2009 133 708

## Description

### Technical Field

The present invention relates to an apparatus for testing the water hammer strength of a glass bottle using a single glass bottle.

### Background Art

The water-hammer-strength test of glass bottles is defined by the "water-hammer test method" prescribed by Japan Glass Bottle Association. This defines the water-hammer test method for packaged glass bottles.

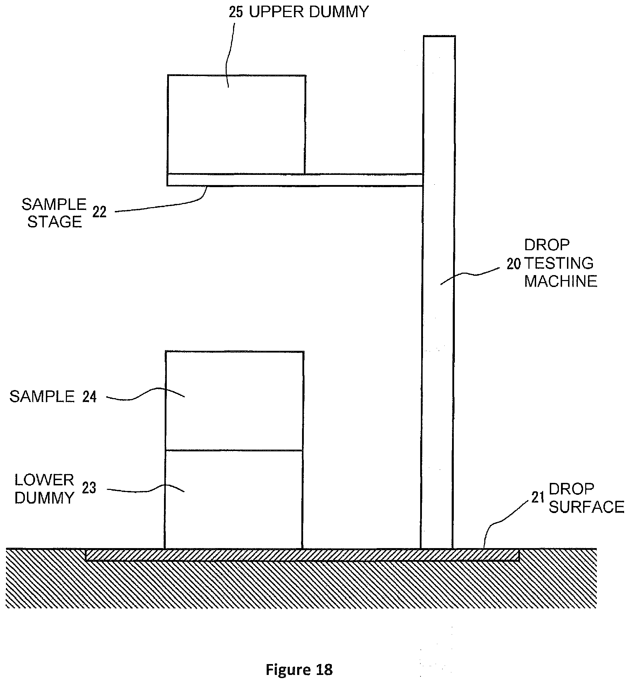

FIG. 18 is a diagram for explaining a test according to the above-mentioned definition. This test uses a drop testing machine 20 defined by "JIS Z 0202". A case of a lower dummy 23 (the same as a sample) is placed on a drop surface 21 (an iron plate having a thickness of 20 mm or more), and a case of a sample 24 is disposed thereon. A case of an upper dummy 25 (the same as the sample) is placed on a sample stage 22 of the drop testing machine 20. The lower dummy 23, the sample 24, and the upper dummy 25 are bottles filled with a predetermined amount of formal content according to a formal filling method and sealed with a predetermined cap, or other equivalents, which are packaged in a predetermined manner. Each case accommodates many glass bottles.

The sample stage is set at a predetermined drop height (the distance between the bottom surface of the upper dummy and the top surface of the sample), and the upper dummy is dropped onto the sample from a drop height of, for example, at first, 30 cm. The drop tests are repeated until a predetermined drop height is reached to see if any one of the glass bottles in the sample is damaged, while increasing the drop height by an increment of 5 cm (for a drop height of 60 cm or more, an increment of 10 cm is applied). The drop height at which any one of the sample bottles is damaged is regarded as the water hammer strength.

When the upper dummy 25 falls onto the sample 24, the case of the lower dummy 23 is deformed, and the glass bottles in the sample 24 are abruptly pushed downward. However, the content (liquid) of the glass bottles remains at the original position due to inertia, creating vacuum portions (vacuum bubbles) at the bottoms of the bottles. Immediately after that, the content abruptly falls onto the bottoms, which are in a vacuum state, causing a water hammer effect.

The "water-hammer test method" prescribed by Japan Glass Bottle Association is for measuring the water hammer strength of packaged glass bottles and is not for testing the water hammer strength of glass bottles themselves (the water hammer strength changes depending on the specifications of packages). Furthermore, because the test cannot be performed without preparing cartons, the test requires many products (about 10 cases). Thus, the water hammer strength evaluation cannot be performed in the test production in the design phase of bottle parisons. Moreover, the test requires considerable labor for tasks such as lifting the cartons, checking the bottles for damage, cleaning up of the damaged bottles, checking the cartons for damage, etc.

PTL 1 below proposes a technique that solves the above-described problems, enables measurement of the water hammer strength of glass bottles themselves with relative ease, and enables strength evaluation in the test production (in the design phase of bottle parisons).

This is a method for testing the water hammer strength of a glass bottle, in which holding means is provided on a fixing stage via a cushion member, the holding means holds the bottle filled with content and sealed with a cap at a position above the center of gravity thereof so as to suspend the bottle in the air, a weight is directly or indirectly dropped onto the cap to apply an impact to the bottle, and the weight is repeatedly dropped while gradually increasing the drop energy, thereby testing the water hammer strength of the bottle on the basis of the drop energy of the weight when the bottle is damaged.

When the weight is directly or indirectly dropped onto the cap, the cushion member is deformed, and the bottle is abruptly pushed downward, causing a water hammer effect. If the weight is dropped onto the bottle held at a position above the center of gravity thereof and suspended, the drop energy of the weight acts on the bottle efficiently. Thus, the drop energy of the weight is strongly associated with the impact applied to the bottle, making it possible to accurately know the water hammer strength of the bottle on the basis of the drop energy of the weight when the bottle is damaged.

### Citation List

### Patent Literature

PTL 1: Japanese Unexamined Patent Application Publication No. 2009-133708

### Summary of Invention

### Technical Problem

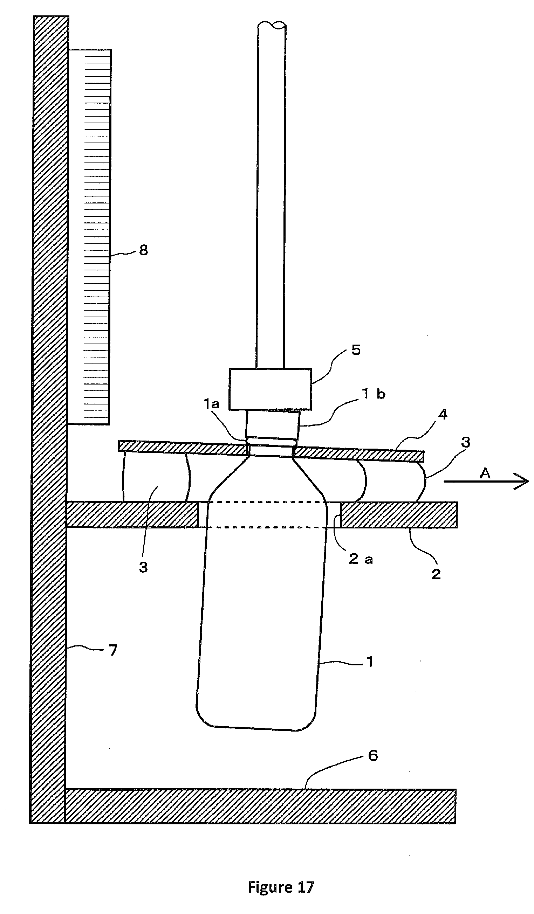

FIG. 17 is a diagram for explaining an example of the apparatus for testing the water hammer strength disclosed in PTL 1, showing a state in which a weight 5 has been dropped.

In this test apparatus, a base stage 6, a post 7, and a fixing stage 2 are formed as a single component. Four cushion members 3 are disposed around a through-hole 2a in the fixing stage 2, and holding means 4 is placed thereon. The cushion members 3 are made of elastic members composed of rubber, soft resin, or the like. The holding means holds a bottle 1 that is filled with content and sealed with a cap 1b at a position above the center of gravity thereof (in this case, below a bead 1a) and suspends the bottle in the air. The weight 5 is provided above the cap 1b of the bottle 1.

When the weight 5 is dropped onto the cap 1b of the bottle, the cushion members 3 are compressed and deformed due to the impact, and the bottle 1 is abruptly pushed downward, causing a water hammer effect.

At this time, because the cushion members 3 are very soft, the compression and deformation thereof do not always occur in the vertical direction, and, as shown in FIG. 17, middle parts or the like may be deformed in the horizontal direction (out-of-plane deformation). Because the extent of the out-of-plane deformation usually differs among the cushion members, the bottle 1 may be inclined, as shown in FIG. 17. Furthermore, the bottle 1 is sometimes significantly inclined, causing the cushion members 3 to move (in a direction of arrow A) or jump out of the apparatus.

It cannot be said that the measured water hammer strength is correct if the bottle is significantly inclined or if the cushion members 3 jump out of the apparatus when the weight 5 is dropped. Thus, in such a case, the cushion members have to be returned to the original positions and the measurement has to be performed again.

An object of the present invention is to prevent the bottle from being inclined when the weight 5 is dropped and to prevent the cushion members 3 from moving due to the impact, thereby enabling efficient and correct measurement of the water hammer strength.

### Solution to Problem

The present invention is an apparatus for testing the water hammer strength as defined in the claims 1, 3 and 4. The apparatus is including: a fixing stage; a cushion member placed on the fixing stage; holding means that is placed on the cushion member and holds a bottle filled with content and sealed with a cap at a position above the center of gravity thereof so as to suspend the bottle in the air; and a weight to be dropped onto the cap to apply an impact to the bottle,
wherein push-down means for forcibly pushing the holding means downward is provided, and wherein the cushion member is compressed and deformed by the push-down means.

By compressing and deforming the cushion member in advance using push-down means, the cushion member becomes less susceptible to out-of-plane deformation when the weight 5 is dropped. As a result, the inclination of the bottle is considerably reduced. The movement of the cushion member is also reduced.

The push-down means may have any mechanism as long as it can forcibly push the holding means downward. Besides the mechanism disclosed in Claim 2 below, push-down means utilizing a known mechanism, such as a clamp or a vice, may be employed.

More specifically, the push-down means may be a bolt screwed to the fixing stage from a top surface side of the holding means.

By providing a bolt hole in the holding means, by providing a female screw hole in the fixing stage, and by screwing the bolt to the fixing stage from the top surface side of the holding means, it is possible to easily push down the holding means to compress and deform the cushion member. The extent by which the holding means is pushed downward may be easily adjusted by changing the tightness of the bolt.

The cushion member may be formed of a plurality of cushion bodies bonded together with a non-cushioning plate therebetween.

By doing so, the cushion member becomes even less susceptible to out-of-plane deformation when the weight 5 is dropped, and, as a result, the inclination of the bottle is further reduced, and the movement of the cushion member is also further reduced.

Examples of the material of the non-cushioning plate include plastic, metal, and wood, which are less likely to be deformed than the cushion member.

According to the invention a non-slip sheet is disposed between the fixing stage and the cushion member and between the cushion member and the holding means.

Because the cushion member experiences significant deformation during the tests, the cushion member is deteriorated (cause cracks) after being subjected to impact several hundreds of times. Thus, the cushion member is an expendable member that requires replacement every time it is deteriorated. Therefore, the cushion member cannot be securely bonded to the fixing stage and the holding means. To prevent the cushion member from falling off, a non-slip sheet having a high coefficient of friction may be disposed between the fixing stage and the cushion member and between the cushion member and the holding means.

By doing so, the cushion member becomes even less likely to move when the weight 5 is dropped.

A sheet having good non-slip effect, such as a natural rubber sheet or a silicone rubber sheet, may be used as the non-slip sheet. The appropriate thickness of the sheet is from about 0.3 mm to 1 mm.

Furthermore, the present invention is the apparatus for testing the water hammer strength according to Claim 1, wherein the fixing stage and/or the holding means has a recess in a surface in contact with the cushion member, wherein the non-slip sheet is provided in the recess, and wherein the cushion member is embedded in the recess by 0.2 mm to 0.8 mm.

By doing so, the non-slip sheet and the cushion member do not come off from the recess, and the movement thereof can be prevented. Although the recess may be provided in only one of the fixing stage and the holding means, it is desirable that the recess be provided in both of them.

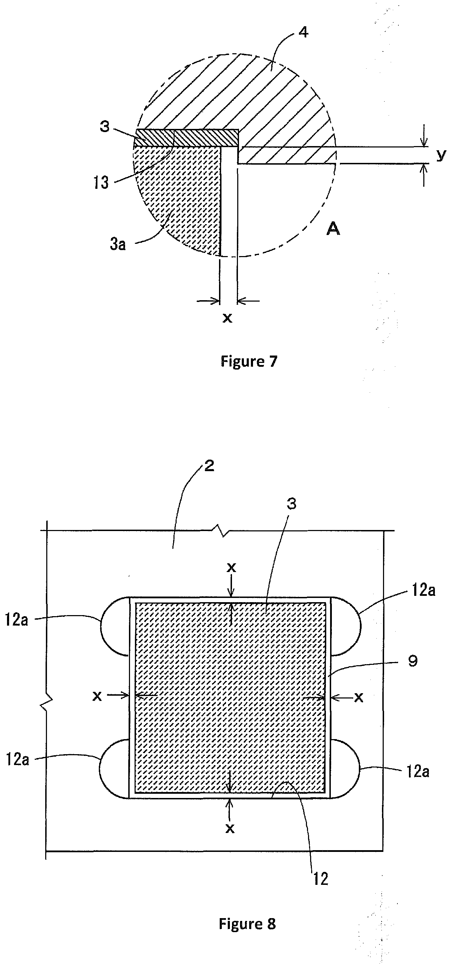

The appropriate amount by which the upper end or the lower end of the cushion member is embedded in the recess (y in FIG. 7) is from about 0.2 mm to 0.8 mm. If it is smaller than 0.2 mm, the cushion member may come off from the recess and move, and if it is larger than 0.8 mm, the cushion member may be cracked when it collides with the outer periphery of the recess, degrading the endurance of the cushion member, which is undesirable.

Note that the appropriate value for the distance between the cushion member and the outer periphery of the recess in the horizontal direction (x in FIG. 7) is 0.1 mm to 0.5 mm. If it is smaller than 0.1 mm, due to the collision between the cushion member and the outer periphery of the recess, the cushion member tends to cause a crack at the corresponding part, and if it is larger than 0.5 mm, the cushion member moves significantly, which may allow the bottle to be inclined.

Furthermore, the present invention is the apparatus for testing the water hammer strength according to Claim 3, wherein the cushion member is formed of a plurality of cushion bodies bonded together with a non-cushioning plate therebetween and non-cushioning plates bonded to the upper and lower ends thereof, wherein the fixing stage and/or the holding means has a recess in a surface in contact with the cushion member, and wherein the plate at the upper end and/or the plate at the lower end is disposed in the recess.

By bonding the non-cushioning plates to the upper and lower ends of the cushion member, the soft cushion body does not collide with the outer periphery of the recess when the cushion member moves, whereby the endurance of the cushion member is maintained. Furthermore, because the upper and lower ends of the cushion member are the non-cushioning plates, the cushion member will not move beyond the recess, whereby the movement of the cushion member is reliably limited.

Furthermore, the present invention is the apparatus for testing the water hammer strength according to Claim 4, wherein the cushion member is formed of a plurality of cushion bodies bonded together with a non-cushioning plate therebetween and non-cushioning plates bonded to the upper and lower ends thereof, wherein the plate at the upper end and/or the plate at the lower end has a hole in the top or bottom surface thereof, and wherein the fixing stage and/or the holding means has a projection that fits into the hole in the surface in contact with the cushion member.

Because the hole in the cushion member and the projection on the fixing stage or the holding means fit together, the movement of the cushion member is prevented.

The fixing stage and the holding means do not need to have a recess and, thus, can be reduced in thickness. Advantageous Effects of Invention

With the apparatus for testing the water hammer strength of the present invention, the cushion member is less susceptible to out-of-plane deformation and is less likely to move when the weight is dropped. Thus, it is possible to efficiently and correctly measure the water hammer strength.

### Brief Description of Drawings

[FIG. 1] FIG. 1 is a cross-sectional diagram for explaining a test apparatus according to an embodiment.
[FIG. 2] FIG. 2 is a side view of a fixing stage, cushion members, and holding means.
[FIG. 3] FIG. 3 is a plan view of the fixing stage, the cushion members, and the holding means.
[FIG. 4] FIG. 4 is a cross-sectional diagram for explaining the test apparatus when the weight is dropped.
[FIG. 5] FIG. 5 is a side view of the fixing stage, the cushion members, and the holding means when the weight is dropped.
[FIG. 6] FIG. 6 is a vertical cross-sectional view of the relevant part of another embodiment.
[FIG. 7] FIG. 7 is an enlarged view of part A in FIG. 6.
[FIG. 8] FIG. 8 is a horizontal cross-sectional view of the relevant part of the embodiment in FIG. 6.
[FIG. 9] FIG. 9 is a vertical cross-sectional view of the relevant part of another embodiment.
[FIG. 10] FIG. 10 is a horizontal cross-sectional view of the relevant part of the embodiment in FIG. 9.
[FIG. 11] FIG. 11 is a vertical cross-sectional view of the relevant part of another embodiment.
[FIG. 12] FIG. 12 is a horizontal cross-sectional view of the relevant part of the embodiment in FIG. 11.
[FIG. 13] FIG. 13 is a vertical cross-sectional view of the relevant part of another embodiment.
[FIG. 14] FIG. 14 is a side view of an exemplary cushion member.
[FIG. 15] FIG. 15 is a side view of an exemplary cushion member.
[FIG. 16] FIG. 16 is a side view of an exemplary cushion member.
[FIG. 17] FIG. 17 is a cross-sectional diagram for explaining a conventional test apparatus.
[FIG. 18] FIG. 18 is a diagram for explaining a method of testing packaged goods.

### Description of Embodiments

### Embodiments

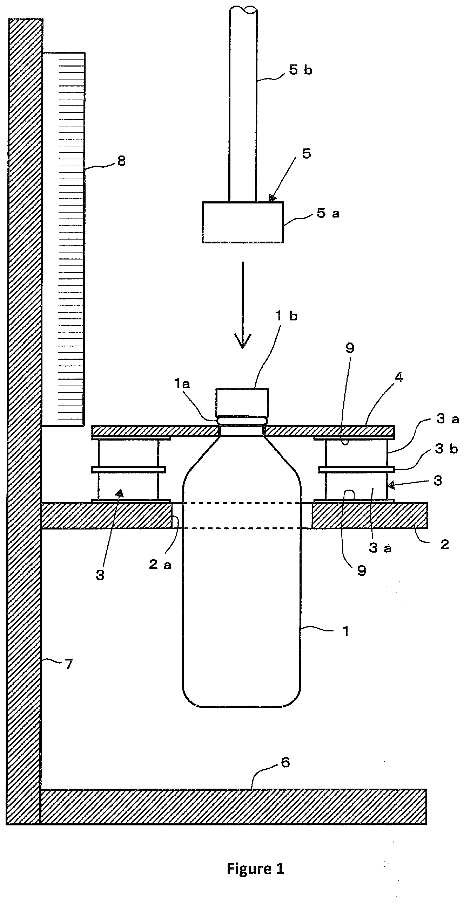

FIGS. 1 to 5 relate to a test apparatus according to an embodiment. A base stage 6, a post 7, and a fixing stage 2 are formed as a single component by processing a steel plate. The post 7 stands upright from the base stage 6 so as to form an L shape, and the fixing stage 2 is formed so as to project from the middle of the post 7. The fixing stage 2 has a through-hole 2a into which a body of a bottle 1 can be inserted.

Cushion members 3 are placed at four corners around the through-hole 2a in the fixing stage 2, and holding means 4 is placed thereon.

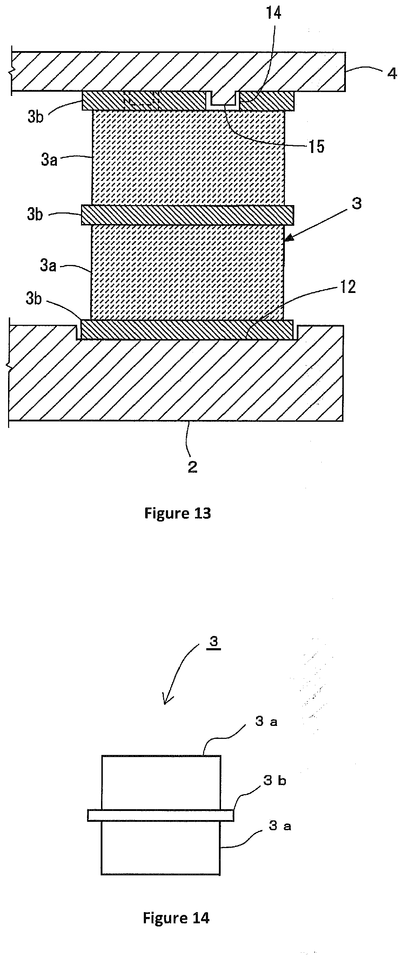

As shown in FIG. 14, each cushion member 3 is formed of two cushion bodies 3a and a plate 3b disposed therebetween, which are securely bonded together. The cushion bodies 3a are made of elastic members composed of rubber, soft resin, or the like. In this case, the cushion bodies 3a are made of soft gel-like members mainly composed of silicone (JIS K 2207, with a penetration of 55 and a Young's modulus of 119.5kPa) and having a size of 20 mm × 20 mm × 10 mm. The plate 3b is made of a non-cushioning material less likely to be deformed than the cushion bodies 3a. Although non-cushioning plastic (i.e., plastic containing no foaming agent), metal, or a wood plate may be used, the plate 3b in this case is made of polycarbonate and has a size of 24 mm × 24 mm × 2 mm.

Non-slip sheets 9 are disposed between the fixing stage 2 and the cushion members 3, and between the cushion members 3 and the holding means 4. The non-slip sheets 9 are silicone rubber sheets having a thickness of 0.5 mm. The non-slip sheets 9 are bonded to the fixing stage 2 and the holding means 4.

The holding means 4 holds the bottle 1 filled with content and sealed with a cap at a position above the center of gravity thereof so as to suspend the bottle in the air. The material and shape of the holding means 4 are not specifically limited as long as it can securely hold the bottle 1 and it can be placed on the cushion members 3. For example, although the holding means 4 having various mechanisms, as disclosed in PTL 1, may be used, these mechanisms are omitted in the drawings of the present invention, and the glass bottle 1 is supported at a part immediately below the bead 1a by a through-hole 4a provided in the central part.

Although it is only necessary that the bottle 1 filled with content and sealed with a cap is held at a position above the center of gravity thereof, it is most desirable that the bottle 1 be held at a neck (immediately below a mouth or the bead).

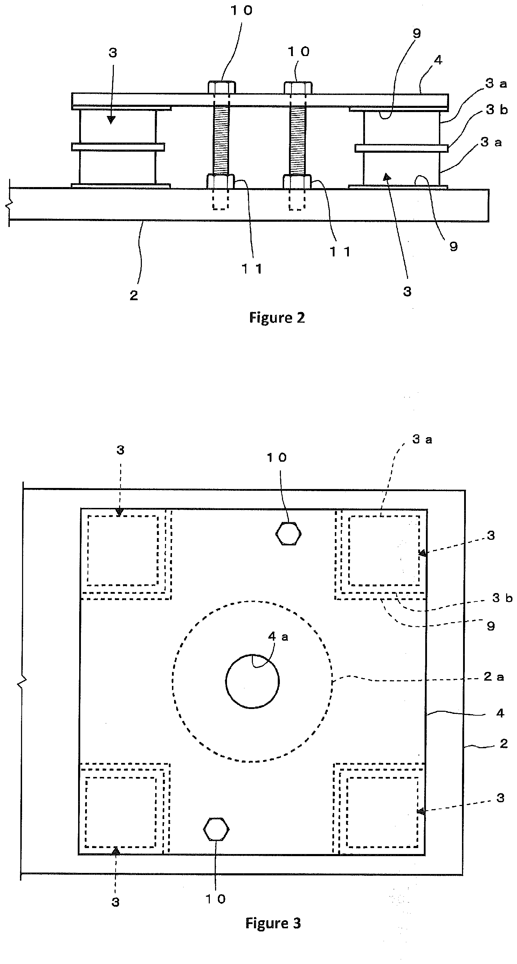

The holding means 4 has two bolt holes, and the fixing stage 2 has corresponding two female screw holes. By screwing bolts 10 with the female screw holes in the fixing stage 2 from the top surface side of the holding means 4, the cushion members 3 are compressed and deformed (FIGS. 2 and 3). Nuts 11 prevent the bolts 10 from loosening. The cushion members 3, which originally have a total thickness of 22 mm, are compressed to a thickness of 20.5 mm by forcibly pushing the holding means 4 downward with the bolts 10.

The weight 5 is provided above the cap 1b of the bottle 1. The weight 5, which is formed of a shaft 5b and a weight body 5a provided at the lower end thereof, is formed so as to protrude from the post 7 and is capable of moving vertically upward and downward along a guide (not shown) having an insertion hole through which the shaft 5b extends. The weight 5, held at a desired height by a stopper (not shown), falls right onto the cap 1b by removing the stopper.

The post 7 is marked with a scale 8 so that the height of the weight can be easily known.

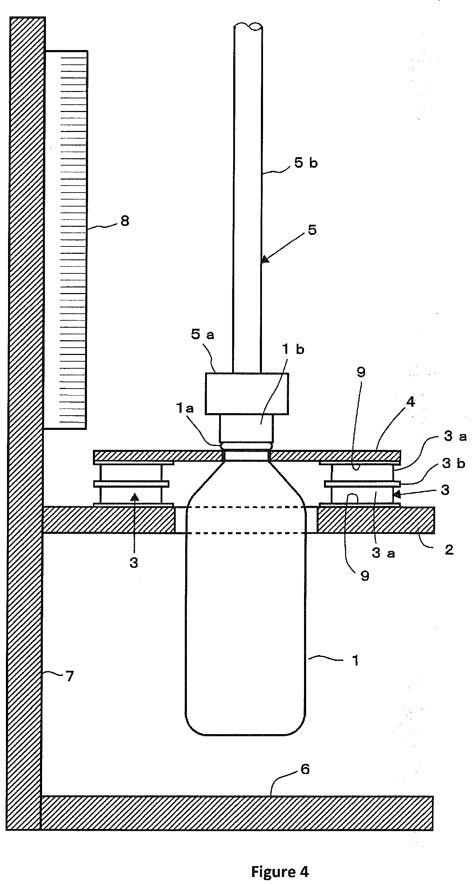

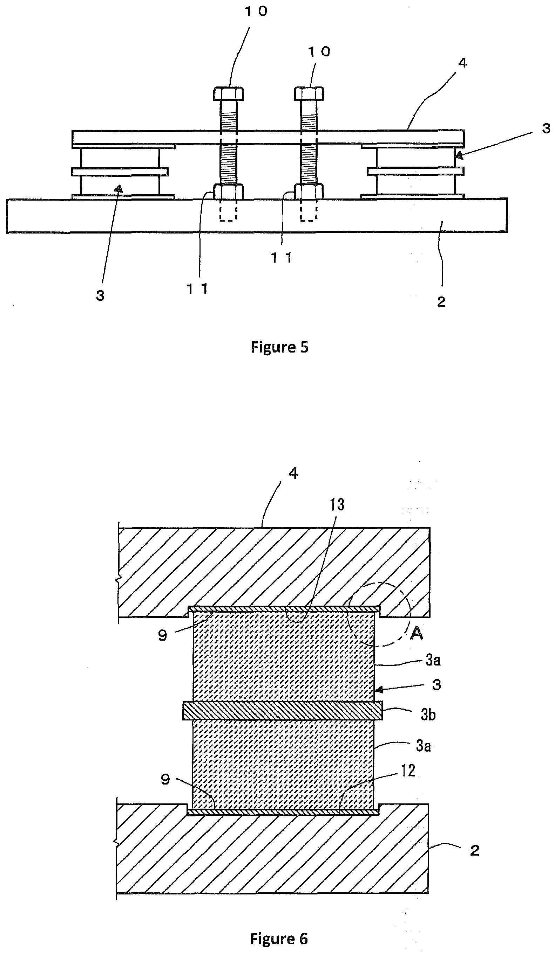

When the weight 5 falls right onto the cap 1b, the cushion members 3 are deformed due to the drop energy thereof, and the holding means 4 and the bottle 1 are abruptly pushed downward (FIGS. 4 and 5), causing a water hammer effect.

Because the bolts 10 slide in the bolt holes in the holding means 4 at this time, the downward movement of the holding means 4 is not blocked. Furthermore, because the bolts 10 guide the downward movement of the holding means 4, the holding means 4 moves downward always vertically, and thus, is less likely to be inclined.

Because the cushion members 3 are compressed and deformed in advance and the plate 3b is provided in the middle thereof, the out-of-plane deformation caused when subjected to the impact of the weight 5 is very small. Moreover, because the bolts 10 guide the downward movement of the holding means 4, the inclinations of the holding means 4 and the bottle 1 are very small.

Whereas the inclination of the bottle 1 when the weight is dropped is 4° at the maximum and 2° on average with the conventional test apparatus 7, the inclination of the bottle 1 was reduced to a visually unrecognizable level in this embodiment.

In the measurement of the water hammer strength according to this embodiment, the weight is dropped several times while gradually increasing the drop energy, and the water hammer strength of the bottle is represented by the drop energy of the weight when the bottle is broken. The drop energy is adjusted by changing the weight and the drop height (the distance between the bottom surface of the weight and the top surface of the cap). The drop energy is mgh, where m is the mass of the weight, h is the drop height, and g is the acceleration of gravity.

FIGS. 6 to 8 show an embodiment in which the structure near the cushion members according to the embodiment in FIG. 1 to 5 is changed. The other structures are the same as those according to the embodiment in FIG. 1 to 5.

Similarly to the above-described embodiment, each cushion member 3 is formed of two cushion bodies 3a and a plate 3b disposed therebetween, which are securely bonded together (FIG. 14).

The non-slip sheets 9 are silicone rubber sheets having a thickness of 0.5 mm and a size of 20.6 mm × 20.6 mm.

The fixing stage 2 and the holding means 4 have recesses 12 and 13 having a depth of 0.8 mm and a size of 20.6 mm × 20.6 mm, in surfaces in contact with the cushion members. Semicircular portions of the recesses denoted by the reference numeral 12a in FIG. 8 are so-called milling cutter reliefs, which have to be provided to allow a milling cutter to cut the recesses. The shape of the recesses 12 in the fixing stage 2 and the shape of recesses 13 in the holding means 4 are exactly identical.

The non-slip sheets 9 are placed in the recesses 12 and 13 in the fixing stage 2 and the holding means 4, and the cushion members 3 are disposed therebetween (FIG. 6). The cushion members 3, which originally have a total thickness of 22 mm, are compressed to a thickness of 20.5 mm by forcibly pushing the holding means 4 downward with the bolts 10.

As shown in FIG. 7, the cushion members 3 are embedded in the recesses 12 and 13 by a length of y. The appropriate value for the length y is from 0.2 mm to 0.8 mm, and in this embodiment, the length y is 0.3 mm. Furthermore, the appropriate value for the distance x between the cushion members 3 and the outer peripheries of the recesses 12 and 13 in the horizontal direction (except for the milling cutter relief portions) is from 0.1 mm to 0.5 mm, and in this embodiment, the distance x is 0.3 mm.

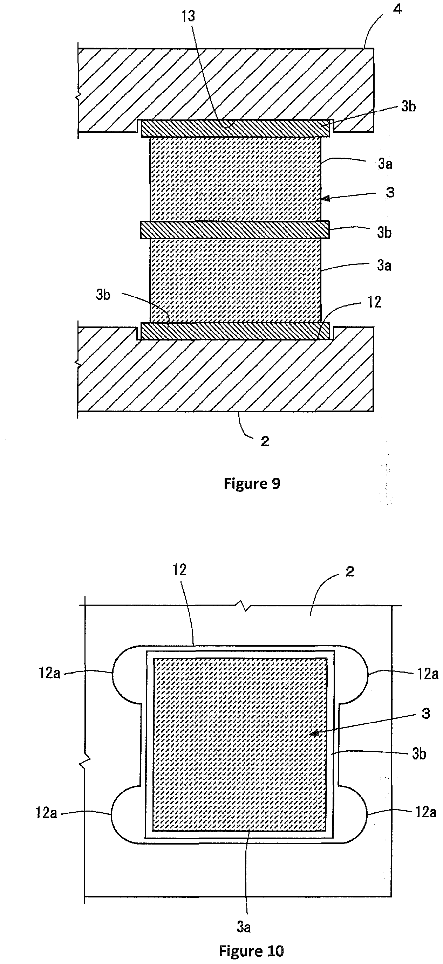

FIGS. 9 and 10 also show an embodiment in which the structure near the cushion members according to the embodiment in FIG. 1 to 5 is changed. The other structures are the same as those according to the embodiment in FIG. 1 to 5.

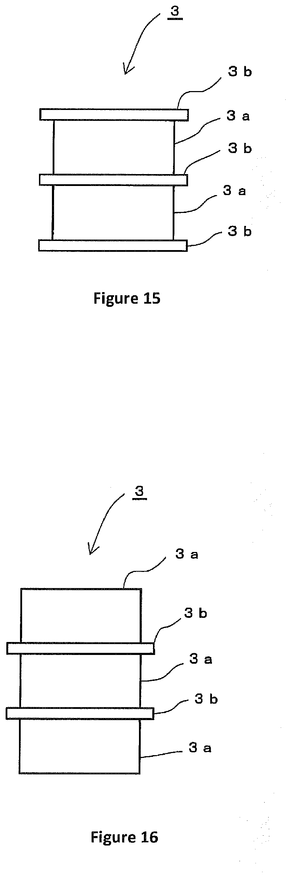

As shown in FIG. 15, each cushion member 3 is formed of two cushion bodies 3a and a non-cushioning plate 3b bonded therebetween, and the same plates 3b securely bonded to the upper and lower ends thereof to form a single component. The cushion bodies 3a have a size of 20 mm × 20 mm × 10 mm, and the plates 3b have a size of 22 mm × 22 mm × 2 mm.

The fixing stage 2 and the holding means 4 have the recesses 12 having a depth of 1.5 mm and a size of 22.8 mm × 22.8 mm in the surface in contact with the cushion members. Semicircular portions of the recesses denoted by the reference numeral 12a in FIG. 8 are so-called milling cutter reliefs, which have to be provided to allow a milling cutter to cut the recesses. The shape of the recesses 12 in the fixing stage 2 and the shape of recesses 13 in the holding means 4 are exactly identical.

The appropriate value for the distance between the plates 3b of the cushion members and the outer peripheries of the recesses 12 and 13 in the horizontal direction (except for the milling cutter relief portions) is from 0.1 mm to 0.5 mm, and in this embodiment, the distance is 0.4 mm.

The plates 3b at the ends of the cushion members are positioned in the recesses 12 and 13 in the fixing stage 2 and the holding means 4, and the cushion members 3 are disposed between the fixing stage 2 and the holding means 4 (FIG. 9). The cushion members 3, which originally have a total thickness of 26 mm, are compressed to a thickness of 24.5 mm by forcibly pushing the holding means 4 downward with the bolts 10.

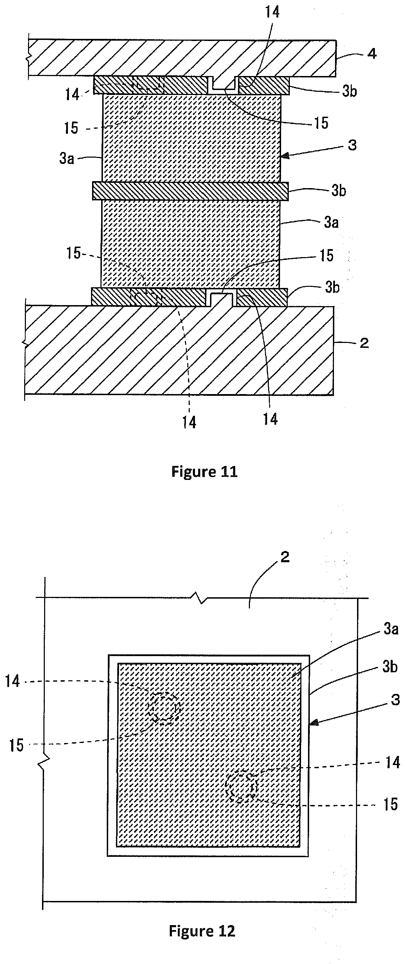

FIGS. 11 and 12 also show an embodiment in which the structure near the cushion members according to the embodiment in FIG. 1 to 5 is changed. The other structures are the same as those according to the embodiment in FIG. 1 to 5.

Although the cushion members 3 are basically the same as those shown in FIGS. 9 and 10, the plates 3b at the upper and lower ends have two round holes 14 (having a diameter of 3.5 mm).

The fixing stage 2 and the holding means 4 have cylindrical projections 15 (having a diameter of 2.5 mm and a height of 1.5 mm) in the surface in contact with the cushion members, at positions corresponding to the holes 14. The appropriate value for the difference in diameter between the holes 14 and the projections 15 is from about 0.1 mm to 1 mm.

The cushion members 3 are disposed between the fixing stage 2 and the holding means 4. At this time, the projections 15 loosely fit into the holes 14 (FIG. 11). The cushion members 3, which originally have a total thickness of 26 mm, are compressed to a thickness of 24.5 mm by forcibly pushing the holding means 4 downward with the bolts 10.

FIG. 13 also shows an embodiment in which the structure near the cushion members according to the embodiment in FIG. 1 to 5 is changed. The other structures are the same as those according to the embodiment in FIG. 1 to 5.

In FIG. 13, although the cushion members 3 are basically the same as those shown in FIGS. 9 and 10, only the plates 3b at the upper end has two round holes 14 (having a diameter of 3.5 mm). This configuration is the same as that of the plate at the upper end of the cushion member shown in FIG. 11.

The fixing stage 2 has the recesses 12 having a depth of 1.5 mm and a size of 22.8 mm × 22.8 mm in the surface in contact with the cushion members (top surface). This configuration is the same as that of the fixing stage shown in FIGS. 9 and 10.

The holding means 4 has the cylindrical projections 15 (having a diameter of 2.5 mm and a height of 1.5 mm) in the surface in contact with the cushion members (bottom surface), at positions corresponding to the holes 14. This configuration is the same as that of the holding means shown in FIG. 11.

The cushion members 3 are disposed between the fixing stage 2 and the holding means 4. The plates 3b at the lower ends of the cushion members 3 are positioned in the recesses 12 in the fixing stage 2, and the projections 15 loosely fit into the holes 14 at the upper ends of the cushion members. The cushion members 3, which originally have a total thickness of 26 mm, are compressed to a thickness of 24.5 mm by forcibly pushing the holding means 4 downward with the bolts 10.

This embodiment employs the structure of the embodiment in FIGS. 9 and 10 at the lower ends of the cushion members and the structure of the embodiment in FIGS. 11 and 12 at the upper ends.

Although each cushion member 3 is formed of two cushion bodies 3a securely bonded together with a non-cushioning plate 3b therebetween in the above-described embodiment, the number of the cushion bodies 3a may be three or more.

FIG. 16 shows an example in which three cushion bodies 3a are securely bonded together with non-cushioning plates 3b therebetween.

### Reference Signs List

- 1:: glass bottle
- 1a:: bead
- 1b:: cap
- 2:: fixing stage
- 3:: cushion member
- 3a:: body
- 3b:: plate
- 4:: holding means
- 5:: weight
- 6:: base stage
- 7:: post
- 8:: scale
- 9:: non-slip sheet
- 10:: bolt
- 11:: nut
- 12:: recess
- 13:: recess
- 14:: hole
- 15:: projection
- 20:: drop testing machine
- 21:: drop surface
- 22:: sample stage
- 23:: lower dummy
- 24:: sample
- 25:: upper dummy

## Claims

1. An apparatus for testing the water hammer strength, the apparatus comprising:
a fixing stage (2);
a cushion member (3) placed on the fixing stage;
holding means (4) that is placed on the cushion member and configured to hold a bottle filled with content and sealed with a cap at a position above the center of gravity thereof so as to suspend the bottle in the air; and
a weight (5) configured to be dropped onto the cap to apply an impact to the bottle,
wherein push-down means for forcibly pushing the holding means downward is provided, **characterized in that**
the cushion member is configured to be compressed and deformed by the push-down means;
a non-slip sheet is disposed between the fixing stage and the cushion member and between the cushion member and the holding means;
the fixing stage and/or the holding means has a recess in a surface in contact with the cushion member;
the non-slip sheet (9) is provided in the recess; and
the cushion member is embedded in the recess by 0.2 mm to 0.8 mm.

2. The apparatus for testing the water hammer strength according to Claim 1,
wherein the cushion member is formed of a plurality of cushion bodies bonded together with a non-cushioning plate therebetween.

3. An apparatus for testing the water hammer strength, the apparatus comprising:
a fixing stage (2);
a cushion member (3) placed on the fixing stage;
holding means (4) that is placed on the cushion member and configured to hold a bottle filled with content and sealed with a cap at a position above the center of gravity thereof so as to suspend the bottle in the air; and
a weight (5) configured to be dropped onto the cap to apply an impact to the bottle,
wherein push-down means for forcibly pushing the holding means downward is provided, **characterized in that**
the cushion member is configured to be compressed and deformed by the push-down means;
the cushion member is formed of a plurality of cushion bodies bonded together with a non-cushioning plate (3b) therebetween and non-cushioning plates bonded to the upper and lower ends thereof,
the fixing stage and/or the holding means has a recess in a surface in contact with the cushion member, and
the plate at the upper end and/or the plate at the lower end is disposed in the recess.

4. An apparatus for testing the water hammer strength, the apparatus comprising:
a fixing stage (2);
a cushion member (3) placed on the fixing stage;
holding means (4) that is placed on the cushion member and configured to hold a bottle filled with content and sealed with a cap at a position above the center of gravity thereof so as to suspend the bottle in the air; and
a weight (5) configured to be dropped onto the cap to apply an impact to the bottle,
wherein push-down means for forcibly pushing the holding means downward is provided, **characterized in that**
the cushion member is configured to be compressed and deformed by the push-down means;
the cushion member is formed of a plurality of cushion bodies bonded together with a non-cushioning plate (3b) therebetween and non-cushioning plates bonded to the upper and lower ends thereof,
the plate at the upper end and/or the plate at the lower end has a hole (14) in the top or bottom surface thereof, and
the fixing stage and/or the holding means has a projection (15) that fits into the hole in the surface in contact with the cushion member.

5. The apparatus for testing the water hammer strength according to any one of claims 1 to 4,
wherein the push-down means is a bolt screwed to the fixing stage from a top surface side of the holding means.

## Patentansprüche

1. Vorrichtung zur Prüfung der Druckschlagfestigkeit, wobei die Vorrichtung umfasst:
eine Aufspannplatte (2)
ein Polsterelement (3), das auf der Aufspannplatte platziert wird;
Haltemittel (4), das auf dem Polsterelement angeordnet und so konfiguriert ist, dass es eine mit Inhalt gefüllte und mit einer Kappe verschlossene Flasche in einer Position oberhalb ihres Schwerpunktes hält, um die Flasche in der Luft aufzuhängen; und
ein Gewicht (5), das so konfiguriert sind, dass es auf die Kappe fallen gelassen wird, um einen Aufprall auf die Flasche auszulösen,
wobei ein Druckmittel zum erzwungenen Drücken der Haltevorrichtung nach unten vorgesehen ist, **dadurch gekennzeichnet, dass** das Polsterelement so konfiguriert ist, dass es komprimiert und durch die Druckmittel verformt wird;
eine rutschfeste Schicht zwischen der Aufspannplatte und dem Polsterelement sowie zwischen dem Polsterelement und den Haltemitteln angeordnet ist;
die Aufspannplatte und/oder das Haltemittel eine Aussparung in einer mit dem Polsterelement in Kontakt stehenden Fläche aufweist;
die rutschfeste Schicht in der Aussparung vorgesehen ist; und
das Polsterelement um 0,2 mm bis 0,8 mm in die Aussparung eingebettet ist.

2. Vorrichtung zur Prüfung der Druckschlagfestigkeit gemäß Anspruch 1,
wobei das Polsterelement aus einer Vielzahl von Polsterkörpern gebildet wird, die mit einer nicht polsternden Platte dazwischen verbunden sind.

3. Vorrichtung zur Prüfung der Druckschlagfestigkeit, wobei die Vorrichtung umfasst:
eine Aufspannplatte (2)
ein Polsterelement (3), das auf der Aufspannplatte platziert wird;
Haltemittel (4), das auf dem Polsterelement angeordnet und so konfiguriert ist, dass es eine mit Inhalt gefüllte und mit einer Kappe verschlossene Flasche in einer Position oberhalb ihres Schwerpunktes hält, um die Flasche in der Luft aufzuhängen; und
ein Gewicht (5), das so konfiguriert sind, dass es auf die Kappe fallen gelassen wird, um einen Aufprall auf die Flasche auszulösen,
wobei ein Druckmittel zum erzwungenen Drücken der Haltevorrichtung nach unten vorgesehen ist, **dadurch gekennzeichnet, dass** das Polsterelement so konfiguriert ist, dass es komprimiert und durch die Druckmittel verformt wird;
das Polsterelement aus einer Vielzahl von Polsterkörpern gebildet wird, die mit einer nicht polsternden Platte (3b) dazwischen und nicht polsternden Platten, die mit ihrem oberen und unteren Ende verbunden sind, verbunden sind,
die Aufspannplatte und/oder das Haltemittel eine Aussparung in einer mit dem Polsterelement in Kontakt stehenden Fläche aufweist und
die Platte am oberen Ende und/oder die Platte am unteren Ende in der Aussparung angeordnet ist.

4. Vorrichtung zur Prüfung der Druckschlagfestigkeit, wobei die Vorrichtung umfasst:
eine Aufspannplatte (2)
ein Polsterelement (3), das auf der Aufspannplatte platziert wird;
Haltemittel (4), das auf dem Polsterelement angeordnet und so konfiguriert ist, dass es eine mit Inhalt gefüllte und mit einer Kappe verschlossene Flasche in einer Position oberhalb ihres Schwerpunktes hält, um die Flasche in der Luft aufzuhängen; und
ein Gewicht (5), das so konfiguriert sind, dass es auf die Kappe fallen gelassen wird, um einen Aufprall auf die Flasche auszulösen,
wobei Druckmittel zum erzwungenen Drücken der Haltevorrichtung nach unten vorgesehen sind, **dadurch gekennzeichnet, dass** das Polsterelement so konfiguriert ist, dass es komprimiert und durch die Druckmittel verformt wird;
das Polsterelement aus einer Vielzahl von Polsterkörpern gebildet wird, die mit einer nicht polsternden Platte (3b), dazwischen und mit den oberen und unteren Enden derselben verbundenen nicht polsternden Platten verbunden sind,
die Platte am oberen Ende und/oder die Platte am unteren Ende ein Loch (14) in ihrer Ober- oder Unterseite hat,
und
die Aufspannplatte und/oder die Haltevorrichtung einen Vorsprung hat, der in das Loch in der Oberfläche in Kontakt mit dem Polsterelement passt.

5. Vorrichtung zur Prüfung der Druckschlagfestigkeit gemäß einem der Ansprüche 1 bis 4,
wobei die Druckvorrichtung ein Bolzen ist, der von einer Oberseite der Haltevorrichtung mit der Aufspannplatte verschraubt ist.

## Revendications

1. Un appareil pour tester la résistance du coup de bélier, l'appareil comprenant : un étage de fixation (2) ; un élément amortisseur (3) placé sur l'étage de fixation ; le moyen de maintien (4) qui est placé sur l'élément amortisseur et configuré pour contenir une bouteille remplie de contenu et scellée avec un bouchon à une position au-dessus du centre de gravité de celle-ci de manière à suspendre la bouteille dans l'air ; et un poids (5) configuré pour tomber sur le bouchon en vue d'exercer un impact sur la bouteille, dans lequel le moyen d'enfoncement pour pousser de force les moyens de maintien vers le bas est prévu, **caractérisé en ce que** l'élément amortisseur est configuré pour être comprimé et déformé par le moyen d'enfoncement ; une feuille antidérapante est disposée entre l'étage de fixation et l'élément amortisseur et entre l'élément amortisseur et le moyen de maintien ; l'étage de fixation et / ou le moyen de maintien présente un évidement dans une surface en contact avec l'élément amortisseur ; la feuille antidérapante (9) est prévue dans l'évidement ; et l'élément amortisseur étant noyé dans l'évidement de 0,2 mm à 0,8 mm.

2. L'appareil pour tester la résistance du coup de bélier selon la revendication 1, dans lequel l'élément amortisseur est formé d'une pluralité de corps amortisseurs collés ensemble avec une plaque non amortissante entre eux.

3. Un appareil pour tester la résistance du coup de bélier, l'appareil comprenant : un étage de fixation (2) ; un élément amortisseur (3) placé sur l'étage de fixation ; le moyen de maintien (4) qui est placé sur l'élément amortisseur et configuré pour contenir une bouteille remplie de contenu et scellée avec un bouchon à une position au-dessus du centre de gravité de celle-ci de manière à suspendre la bouteille dans l'air ; et un poids (5) configuré pour tomber sur le bouchon en vue d'exercer un impact sur la bouteille, dans lequel le moyen d'enfoncement pour pousser de force le moyen de maintien vers le bas est prévu, **caractérisé en ce que** l'élément amortisseur est configuré pour être comprimé et déformé par le moyen d'enfoncement ; l'élément amortisseur est formé d'une pluralité de corps amortisseurs collés ensemble avec une plaque non amortissante (3b) entre celles-ci et des plaques non amortissantes collées aux extrémités supérieures et inférieures de celles-ci, l'étage de fixation et / ou le moyen de maintien présente un évidement dans une surface en contact avec l'élément amortisseur, et la plaque à l'extrémité supérieure et / ou la plaque à l'extrémité inférieure est disposée dans l'évidement.

4. Un appareil pour tester la résistance du coup de bélier, l'appareil comprenant : un étage de fixation (2) ; un élément amortisseur (3) placé sur l'étage de fixation ; le moyen de maintien (4) qui est placé sur l'élément amortisseur et configuré pour maintenir une bouteille remplie de contenu et scellée avec un bouchon à une position au-dessus du centre de gravité de celle-ci de manière à suspendre la bouteille dans l'air ; et un poids (5) configuré pour être déposé sur le bouchon en vue d'exercer un impact sur la bouteille, dans lequel le moyen d'enfoncement pour pousser de force le moyen de maintien vers le bas est prévu, **caractérisé en ce que** l'élément amortisseur est configuré pour être comprimé et déformé par le moyen d'enfoncement ; l'élément amortisseur est formé d'une pluralité de corps amortisseurs collés ensemble avec une plaque non amortissante (3b) entre celles-ci et des plaques non amortissantes liées à leurs extrémités supérieure et inférieure, la plaque à l'extrémité supérieure et / ou la plaque à l'extrémité inférieure a un trou (14) dans la surface supérieure ou inférieure de celle-ci, et l'étage de fixation et / ou le moyen de maintien a une saillie (15) qui s'adapte dans le trou de la surface en contact avec l'élément amortisseur.

5. L'appareil pour tester la résistance du coup de bélier selon l'une quelconque des revendications 1 à 4, dans lequel le moyen d'enfoncement est un boulon vissé à une étape de fixation à partir d'un côté de la surface supérieure du moyen de maintien.
